# EUROPEAN PATENT APPLICATION

(11) **EP 2 782 031 A1**
(43) Date of publication of application: **24.09.2014**
(21) Application number: 13184304.7
(22) Date of filing: 13.09.2013
(51) Int. Cl.: G06F 17/50

(54) **Design method, design device, and design program**

(30) Priority: 22.03.2013 JP 2013061145
(71) Applicant: Kabushiki Kaisha Toshiba, Tokyo (JP)
(72) Inventor: Ooishi, Yasushi, Tokyo (JP); Kozuka, Shinya, Tokyo (JP)
(74) Representative: HOFFMANN EITLE

(57) **Abstract**

According to one embodiment, a design method for designing a product including a plurality of general-purpose components and a plurality of non-general-purpose components, the design method includes the steps of: (a) obtaining from a storage device the plurality of general-purpose components having color information substituted for a plurality of first attribute information of each of the plurality of general-purpose components; (b) arranging the plurality of general-purpose components on a three-dimensional CAD screen, and arranging the plurality of non-general-purpose components on the three-dimensional CAD screen; and (c) assembling each of the arranged plurality of general-purpose components and each of the plurality of the non-general-purpose components into the product on the three-dimensional CAD screen, and substituting the color information for each of a plurality of second attribute information contained in any of the plurality of the non-general-purpose components.

## Description

### FIELD

Embodiments described herein relate generally to a design method, a design device, and a design program.

### BACKGROUND

Conventionally, designers that deal with two-dimensional drawings manually input attribute information such as surface roughness symbols, fit symbols, screw symbols, and so on, onto two-dimensional drawings of components that are part of an assembled product. In the case of three-dimensional design using a three-dimensional computer aided design (CAD) device also, the designer manually inputs the attribute information on a three-dimensional CAD screen, while creating three-dimensional component models.

### BRIEF DESCRIPTION OF THE DRAWINGS

FIG. 1 illustrates a work flow from conceptual design to output of drawings based on conventional two-dimensional drawings;
FIG. 2 illustrates a flow of a design method according to a first embodiment;
FIG. 3A and FIG. 3B are schematic perspective views illustrating a state in which color has been applied to general-purpose components, and FIG. 3C illustrates a flow for determining whether or not a specific surface of a purchased component and a specific surface of a process component are in contact;
FIG. 4A and FIG. 4B illustrate design rules and coloring rules according to the first embodiment;
FIGS. 5A through 5D illustrate a flow of converting three-dimensional drawings into two-dimensional drawings;
FIG. 6 illustrates a concept of design information;
FIG. 7 illustrates an example of checking of attribute information in three-dimensional drawings and checking of screw information;
FIG. 8 illustrates an example of a three-dimensional drawing converted to a two-dimensional drawing;
FIG. 9 illustrates a flow of a method of checking drawings according to a second embodiment;
FIG. 10 illustrates an example of checking for geometric tolerance;
FIG. 11 illustrates checking of a screw, a drilled hole, and a tapped hole;
FIG. 12 illustrates an example of checking display displayed on the three-dimensional CAD screen;
FIG. 13 illustrates a check column displayed in a separate window; and
FIG. 14 illustrates a block diagram for a design device according to a third embodiment.

### DETAILED DESCRIPTION

In general, according to one embodiment, a design method for designing a product including a plurality of general-purpose components and a plurality of non-general-purpose components, the design method includes the steps of: (a) obtaining from a storage device the plurality of general-purpose components having color information substituted for a plurality of first attribute information of each of the plurality of general-purpose components; (b) arranging the plurality of general-purpose components on a three-dimensional CAD screen, and arranging the plurality of non-general-purpose components on the three-dimensional CAD screen; and (c) assembling each of the arranged plurality of general-purpose components and each of the plurality of the non-general-purpose components into the product on the three-dimensional CAD screen, and substituting the color information for each of a plurality of second attribute information contained in any of the plurality of the non-general-purpose components.

The design method according to the embodiment is a method of designing a product that includes a plurality of general-purpose components and a plurality of non-general-purpose components. The design method according to the embodiment comprises: obtaining the plurality of general-purpose components each having a plurality of first attribute information for which color information has been substituted from a storage device; arranging the plurality of general-purpose components onto a three-dimensional CAD screen together with arranging the plurality of non-general-purpose components on the three-dimensional CAD screen; and assembling each of the arranged plurality of general-purpose components and each of the plurality of the non-general-purpose components into the product on the three-dimensional CAD screen, and substituting color information for each of a plurality of second attribute information that is included in the plurality of the non-general-purpose components.

Hereinafter, embodiments will be described below with reference to the drawings. In the following description, the same reference numeral is applied to the same member, and for members that have been described once, the description is omitted as appropriate.

### First Embodiment

Before describing the design method according to the first embodiment, the flow from conceptual design to issuing drawings is described. In the following description, manufacturing equipment is illustrated as an example of a designed product.

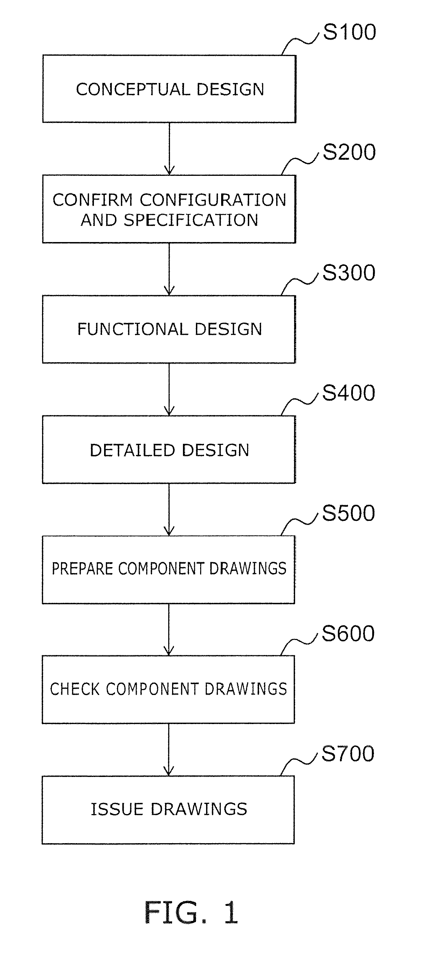

FIG. 1 illustrates the work flow from conceptual design to output of drawings based on conventional two-dimensional drawings.

In the design of manufacturing equipment, first conceptual design is carried out (step S100). At the conceptual design stage, the feasibility of product processing and assembly is not necessarily required. In other words, in conceptual design rough sketching is carried out. In this stage the designer can carry out free modeling using three-dimensional CAD. In other words, in conceptual design, image drawings of the manufacturing equipment are prepared. In conceptual design it is checked whether or not the manufacturing equipment can be configured as the object to be designed.

After conceptual design checking of the drawings is carried out. For example, the configuration and the specification is checked to determine whether there are any errors in the conceptual design (step S200).

Next, detailed design of the manufacturing equipment is carried out (step S300). Detailed design corresponds to the work of preparation of assembly drawings. Detailed design is design to determine the shape of each of the constituent components. In detailed design, besides the unit functional information, information on the unit processing and assembly is incorporated. In the first embodiment, at this stage coloring may be applied to the components from which the manufacturing equipment is configured (described later).

After detailed design, further checking of drawings is carried out. For example, in detailed design functional checking of drawings is carried out to determine whether or not there is an error in the operational function of the constituent components, to evaluate the feasibility of assembly, the number of components, the strength, and so on (step S400).

Next, component drawings of the manufacturing equipment are prepared (step S500). At this stage drawings are prepared for each of the plurality of components from which the manufacturing equipment is configured. At this stage the component drawings may be three-dimensional drawings or they may be two-dimensional drawings.

After the component drawings have been prepared, the component drawings are checked to determine whether or not there is a mistake in the component drawings (step S600). Then the drawings of the manufacturing equipment are issued (step S700).

At each stage between the design and checking the drawings, a design review of the manufacturing equipment up to that stage may be carried out. For example, there may be a design review to obtain approval of the concept, or a design review to obtain approval of the details before the drawings are issued. Checking the drawings for configuration and specification may be carried out before the design review to obtain approval of the concept, and checking the drawings for function may be carried out before the design review to obtain approval of the details.

In the era when two-dimensional CAD was the mainstream, inputting attribute information such as surface roughness symbols, fit symbols, screw symbols, and so on onto the component drawings was carried out by the designer designing the manufacturing equipment or the draftsperson. The work of preparing the component drawings from the two-dimensional assembly drawings is mainly carried out by tracing the assembly drawings, and the work of indicating the attribute information was allocated to the draftsperson if they had knowledge of drafting.

On the other hand, with three-dimensional CAD, it is possible to assemble and disassemble the manufacturing equipment on a three-dimensional CAD screen in the stage prior to preparation of component drawings. Also, it is possible to convert arbitrary projection views or cross-sectional views of three-dimensional drawings represented on a three-dimensional CAD screen as two-dimensional drawings. Therefore, inputting the attribute information for each component is possible at the assembly stage prior to the stage of preparation of component drawings. In other words, it is necessary to input the attribute information at the assembly stage, not at the stage of preparation of components drawings. However, in an environment where three-dimensional CAD is used, it is not possible to delegate the input of attribute information, which is a burden for the designer.

Also, in three-dimensional CAD, inputting the attribute information for the constituent components from which the manufacturing equipment is configured takes a lot of time. In the following, the situation is described as Reference Example 1.

For example, for one component (one drawing), drawing information is input manually at an average of 10 locations, and in addition the work of checking is envisaged. For manufacturing equipment, one unit is configured from an average of 70 components. In this case the work of inputting and the work of checking is carried out at 10 locations × 70 components = 700 locations per unit.

If checking requires 20 seconds per location, the time for checking alone is 20 seconds × 700 locations = 14,000 seconds (about 4 hours). In addition, manufacturing equipment may be configured from an average of 10 units. In addition, particularly large manufacturing equipment may be configured from about 60 units. In this case the number of locations to be checked is 700 × 10 = 7,000 locations. In this case the checking time is 40 to 50 hours. In addition, when particularly large, the checking time can be 200 to 300 hours.

Normally the items of attribute information that should be input by the designer are limited to special items that the designer must intend, such as input of special surface roughness (surface roughness Ra = 0.8 µm or less, and so on), specification of quenching treatment, welding symbols, and so on. The time for inputting this attribute information is not more than 5% of the total checking time, so the time required for inputting the attribute information per 1 unit is about 14,000 seconds × 5% = 700 seconds (about 10 to 15 minutes). In this way, in Reference Example 1, a large amount of time is required for inputting and checking attribute information as simple work associated with manufacturing equipment.

In contrast, the following is a description of the first embodiment.

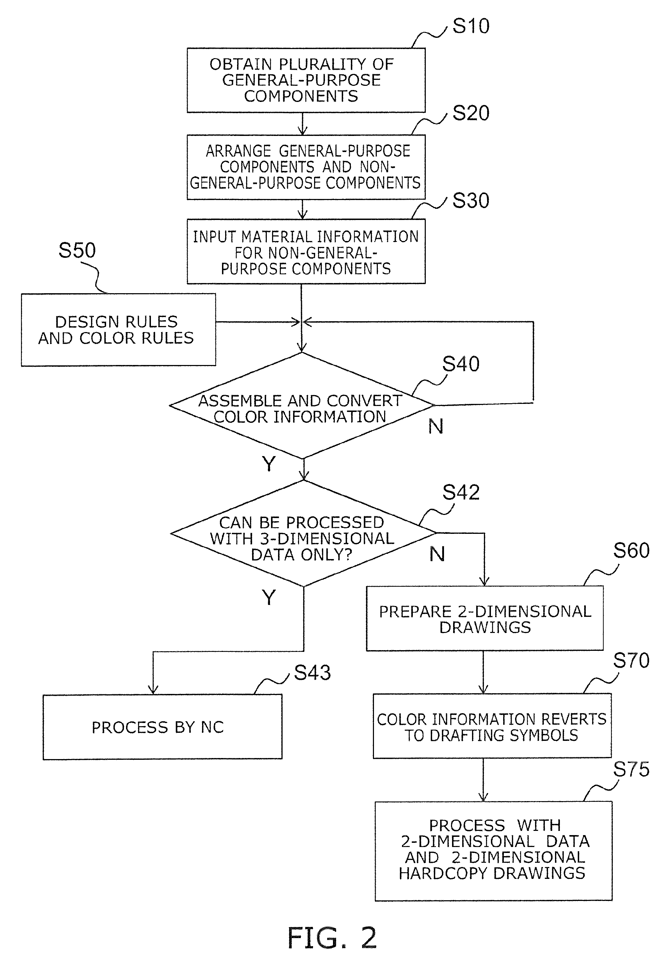

FIG. 2 illustrates the flow of the design method according to the first embodiment.

Step S10 through step S40 in FIG. 2 are step S300 in FIG. 1 in more specific detail. Step S60 to step S70 in FIG. 2 are step S500 to step S600 in FIG. 1 replaced with operations using three-dimensional data. Step S10 through step S40 is work that is carried out by the designer. The next steps from step S40 correspond to the stage of issuing drawings.

In FIG. 2, the flow of the design method for designing a product (for example, manufacturing equipment) having a plurality of general-purpose components and a plurality of non-general-purpose components is represented.

First, a plurality of general-purpose components (for example, a library of purchased components or the like) is obtained from a memory unit (storage device) (step S10). The storage device may be a storage device provided within a design device, or it may be an external storage device connected to the design device online. The designer inputs the information for the plurality of general-purpose components to be obtained from an input unit (input device) of the design device. The design device is a three-dimensional CAD device.

Each of the plurality of general-purpose components is stored within the storage device. Each of the plurality of general-purpose components is arranged as a library within the storage device. General-purpose components include, for example, commercially purchased components, components that do not require new processing, and so on, standardized units, and their software models. Specifically, examples of general-purpose components include commercial cylinders, motors, bearings, guides, shafts, screws, pins, and so on. Each of the plurality of general-purpose components includes a plurality of attribute information (first attribute information). The plurality of attribute information includes surface roughness information, tolerance information, fit information, material information, and so on for each of the plurality of general-purpose components.

Also, each of the plurality of attribute information is substituted with color information. For example, a specific surface of one of the general-purpose components from among the plurality of general-purpose components is colored, for example, beige. The color beige means a specific surface roughness. Also, a specific portion of this general-purpose component is colored, for example, green. This green color means a tolerance of fit. Also, this general-purpose component may be fitted to another general-purpose component. In this case, information on the fit of these general-purpose components is substituted with color information for that fit, for example, orange or the like. Also, blue means a course screw thread, and light blue means a fine screw thread. The information on the fit of the threaded portion of a general-purpose component and the mating side into which it is screwed is substituted with the same blue or light blue color.

Next, the designer arranges each of the plurality of general-purpose components on a three-dimensional CAD screen. A plurality of non-general-purpose components is arranged on the three-dimensional CAD screen together with the arrangement of the general-purpose components (step S20).

The non-general-purpose components are, for example process components that require new processing, and are not commercially purchased components or standard units. Specifically, process components can include plates, brackets, and so on that connect a plurality of purchased components or purchased units.

For preparation of drawings for a product that includes general-purpose components and non-general-purpose components, a plurality of attribute information is also necessary for the non-general-purpose components. The plurality of attribute information includes surface roughness information, tolerance information, fit information, material information, and so on for the non-general-purpose components.

Next, information regarding the material of the non-general-purpose components is input by the designer to the design device via the input unit (step S30). Information regarding material can include, for example, information regarding metal material, resin material, insulating material, and so on.

Next, the designer assembles each of the plurality of general-purpose components and each of the plurality of non-general-purpose components as the product on the three-dimensional CAD screen. In this case, each of the plurality of attribute information (second attribute information) included in each of the plurality of non-general-purpose components is automatically substituted with color information on the three-dimensional CAD screen (step S40).

In other words, when assembled, when a first portion of any of the plurality of non-general-purpose components contacts a second portion of any of the plurality of general-purpose components, the first portion of the non-general-purpose component automatically inherits the color information of the second portion of the general-purpose component. Design rules and coloring information coloring rules that are explained later are applied to assembling and to inheriting color information (step S50).

Specifically, when the designer is preparing an assembly model, a plurality of purchased components obtained from the library is arranged on the three-dimensional CAD screen. After the plurality of purchased components has been arranged, the plurality of purchased components is joined together using process components on the three-dimensional CAD screen. Next, the manufacturing equipment is modeled using connecting components such as screws, pins, and so on.

Before assembly, an arranged purchase component includes attribute information and color information corresponding to the attribute information. Also, before assembly, the attribute information of the process components that should be input is considered by the designer. Also, before assembly, the process components do not have color information.

In Reference Example 1, at this stage the designer inputs attribute information to the three-dimensional CAD screen for the process components such as characters, symbols, and so on. Therefore, in Reference Example 1, a large amount of time is required for inputting and checking attribute information. In the first embodiment, at this stage the designer does not have to carry out this input work and checking work.

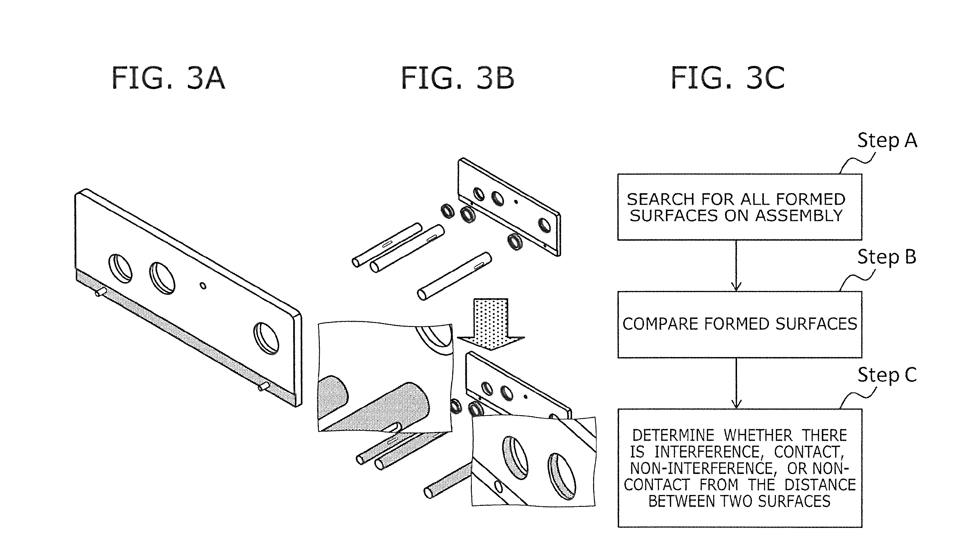

For example, FIG. 3A and FIG. 3B are schematic perspective views illustrating the state in which color has been applied to general-purpose components, and FIG. 3C illustrates the flow for determining whether or not a specific surface of a purchased component and a specific surface of a process component are in contact. Each hatching represented on FIG. 3A and FIG. 3B represents skin color, green, orange, or a mixture of these colors.

For example, as illustrated in FIG. 3A, a color (skin color) corresponding to a surface roughness Ra = 6.3 µm is applied to a plate contact surface 10a of a guide 10 which is a purchased component. Also, the placement surface of a cylinder which is a purchased component has a color corresponding to a surface roughness Ra = 6.3 µm (not illustrated on the drawings). In other words, a fixed contact surface of a purchased component has a color corresponding to the surface roughness Ra = 6.3 µm.

Also, as illustrated in FIG. 3B, the surfaces of an outer ring and an inner ring of a bearing 20 and the shaft 21 of a motor shaft and so on have Ra = 1.6 µm, a shaft that is fitted into the hole of a guide 10 has the fit symbol g6 (orange), and the color (green) is applied to the corresponding hole which has the symbol H7.

In addition, a color (blue) corresponding to a screw size is applied to a connecting member (not illustrated on the drawings). Pins are also colored with the same color (orange) as a shaft (not shown on the drawings).

After assembling, the designer colors the process component with the color corresponding to the attribute information. At this time, the contact surface of a process component that contacts a purchased component automatically inherits the color information of the contacted surface of the purchased component on the three-dimensional CAD screen.

Before the color information is automatically inherited, it is automatically determined by a calculation unit (calculation device) within the design device whether or not a specific surface of the purchased component and a specific surface of the process component are in contact. To determine whether formed surfaces are in contact, first, a search is carried out for all formed surfaces in the assembly (step A). Next, formed surfaces are compared (step B). In the comparison, the necessary conditions are that the normal vector to each surface are facing towards each other and are parallel. Then, if two surfaces are found that match the above conditions, it is determined from the distance between the two surfaces whether they are interfering, contacting, not contacting, or not interfering (step C). In this way, it is determined that a specific surface of a purchased component and a specific surface of a process component are contacting. Also, the criteria for determining interference, contact, and non-contact (the allowable distance between surfaces) can be set in the initial file.

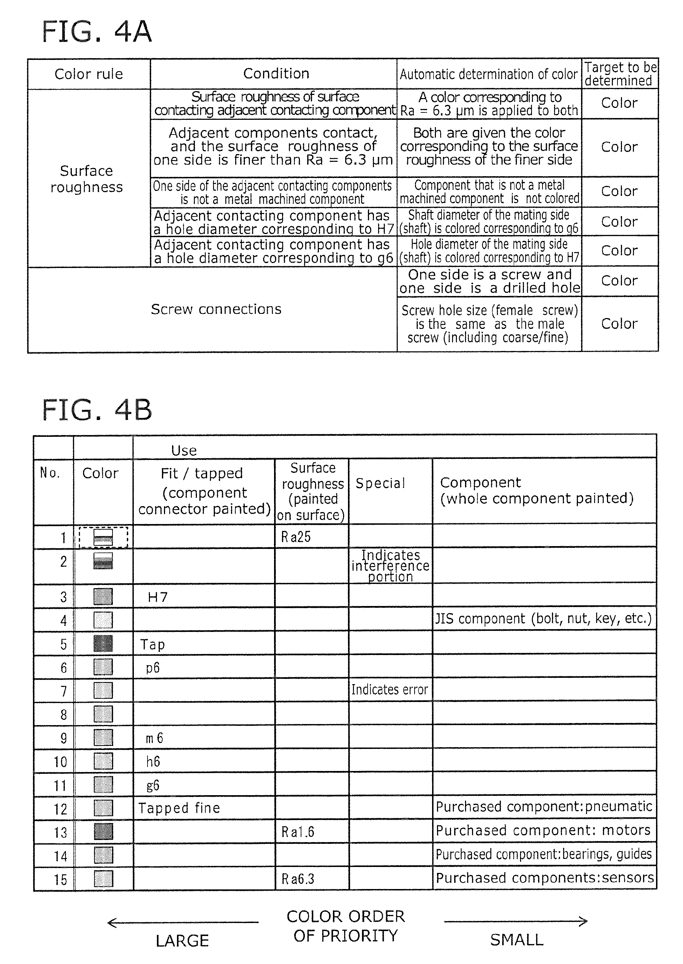

FIG. 4A and FIG. 4B illustrate design rules and coloring rules according to the first embodiment. Each hatched area in FIG. 4B corresponds to one of skin color, green, orange, and a mixture of these colors.

In the first embodiment, the surface roughness, the fit, the screw sizes, and so on are not defined by the dimensional expressions of drafting rules, but are defined by color information. For example, as illustrated in FIG. 4A, Each of a plurality of surface roughness information and each of a plurality of screw connection information are expressed with colors. The designer can recognize at a glance surface roughness information or screw connection information from each color. Also, the colors corresponding to attribute information is arranged in a table as illustrated in FIG. 4B.

For example, if surface roughness is defined by a color, the following rule is followed (FIG. 4A).

For example, for "the surface roughness on the surface contacting an adjacent contacting component", the contacting surfaces are "both colored with the color corresponding to Ra = 6.3 µm". Here, "adjacent contacting" means the state in which two components are adjacent to each other and contact each other. When "adjacent contacting components contact each other, and one side has a surface roughness that is finer than Ra = 6.3 µm", then "both sides are colored with color corresponding to the surface roughness of the finer side". When "one side of the adjacent contacting components is not a metal machined component", then "the component that is not a metal machined component is not colored". When "an adjacent contacting component has a hole diameter corresponding to H7", then "the shaft diameter of the mating side (shaft) is colored corresponding to g6". When "an adjacent contacting component has a hole diameter corresponding to g6", then "the shaft diameter of the mating side (shaft) is colored corresponding to H7". Also, when both are new components (color is not applied), when surfaces contact each other, both are colored with the color corresponding to Ra = 6.3 µm ( skin color).

Also, when screw connections are defined with colors, for example, the following rules are applied.

For example, "when one side is a screw the other side is a cut hole". Also, "a screw hole size (female screw) is a course screw or a fine screw, the same as the male screw".

In addition, when specifying attribute information, when a process component is a machined component the above information is inherited, but when the component cannot be processed to high accuracy, such as sheet metal, rubber materials, or the like, the information is not inherited. As stated above, the material information for process components is input by the designer as component information for the process components before assembly.

With this method, the work of inputting attribute information represented by characters or symbols for the contacting surface of a process component that contacts a specific surface of a purchased component is not required. In other words, by a process component automatically inheriting color information from a purchased component, the process component inherits the attribute information defined by the color information without input work by the designer.

Also, to check the attribute information it is sufficient to check the color. In other words, the designer does not have work to read visually the attribute information expressed as characters or symbols.

Returning again to FIG. 2, the flow after assembly is described.

After assembly and substitution with color information, it is determined whether processing is possible from three-dimensional data only (step S42). If processing is possible, the three-dimensional data is converted into NC data, and NC processing is carried out (step S43).

If processing is not possible, two-dimensional drawings are produced. In other words, after the process components have inherited color information from the purchased components, if any of the cross-sections of the plurality of general-purpose components represented on the three-dimensional CAD screen are to be represented on two-dimensional drawings as in step S60, the color information included on any of the plurality of general-purpose components reverts to the plurality of attribute information (step S70). Then, each of the plurality of attribute information is added to the two-dimensional drawings.

Also, after the process components have inherited color information from the purchased components, if any of the cross-sections of the plurality of non-general-purpose components represented on the three-dimensional CAD screen are to be represented on two-dimensional drawings, the color information included on any of the plurality of non-general-purpose components reverts to the plurality of attribute information. Then each of the plurality of attribute information is applied to the two-dimensional drawings.

In other words, when cross-sections of a three-dimensional view represented on the three-dimensional CAD screen are converted into two-dimensional drawings, the color information of the three-dimensional view automatically reverts to attribute information such as characters or symbols or the like, and the attribute information such as characters or symbols or the like are incorporated into the two-dimensional drawings. Then, processing is carried out using the two-dimensional data and the two-dimensional drawings (step S75).

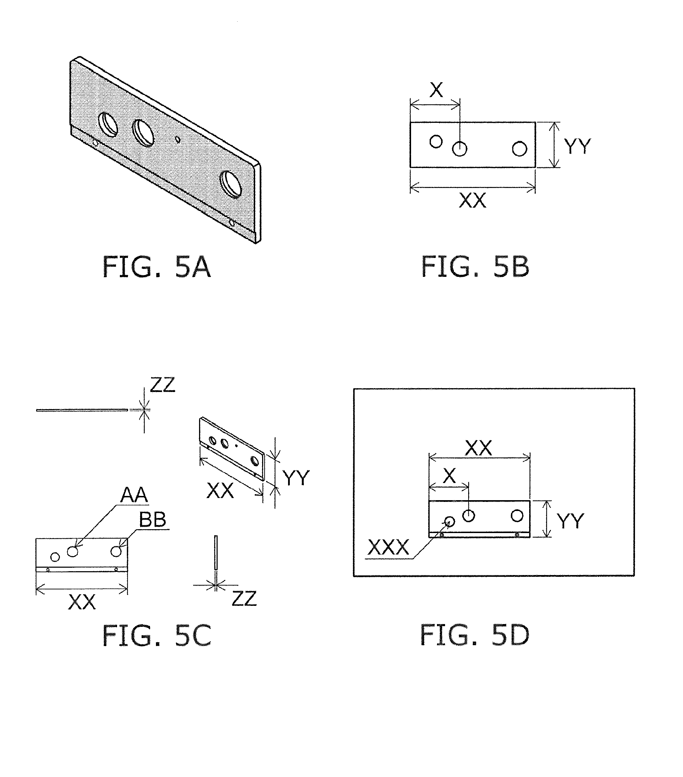

FIGS. 5A through 5D illustrate the flow of converting three-dimensional drawings into two-dimensional drawings.

As illustrated in FIG. 5A, the three-dimensional guide 10 represented on the three-dimensional CAD screen, as illustrated in FIG. 5B, is projected onto a two-dimensional plane on the three-dimensional CAD screen by the designer (specifying a front view, side view, and so on), and dimension lines and auxiliary dimension lines are added to the projected view. This work can be done mechanically by an operator with a certain amount of drafting knowledge, and does not have to be done by the designer, or it can be carried out automatically as a function of the CAD itself.

Next, as illustrated in FIG. 5C, surface roughness symbols, fit symbols, and screw size leader line symbols, and so on are automatically reverted from the color information using a dimensional display command of the design device. Then, as illustrated in FIG. 5D, the drawing scale is automatically determined by the designer specifying the drawing boundary. In other words, the guide 10 displayed on the three-dimensional CAD screen is converted into a two-dimensional drawing. The font size of the numerals of the roughness symbol and so on can be converted automatically into an appropriate size by inputting the scale as a subcommand of the dimensional display command.

The relationship between the numerals representing the surface roughness and the color, and the necessary rules related to the input of attribute information can be changed in the initial file setting. In other words, information can be input in accordance with local rules on each designer's side.

In this way, according to the first embodiment, the work of inputting attribute information carried out every time a non-general-purpose component is added can be automatically carried out. In this way design by three-dimensional CAD can be carried out faster.

Also, the non-general-purpose component for which each of the plurality of attribute information has been automatically substituted with color information may be stored within the storage device as a standard component or standard unit as a general-purpose component, and the information for this component that has been converted into a general-purpose component may be used in the future.

### Second Embodiment

Before describing the second embodiment, Reference Example 2 in which the various checking of drawings included in the flow in FIG. 1 is carried out manually using two-dimensional drawings is described below.

For example, checking of drawings using two-dimensional drawings is carried out manually while viewing the hard copies (drawing sheets) of the drawings of two related constituent components. Also, checking of drawings on a three-dimensional CAD screen is carried out by comparing two related models on the three-dimensional CAD screen. Even with three-dimensional design, normally checking of drawings is carried out by converting to two-dimensional drawings. In other words, normally checking of drawings is carried out using two-dimensional drawings.

An example is envisaged in which checking of drawings is carried out as a manual operation at an average of 10 locations for 1 component (1 drawing), the same as for Reference Example 1. In manufacturing equipment, 1 unit is configured from an average of 70 components, so for 1 unit an average of 10x70 = 700 locations are checked. If checking of 1 location requires 10 seconds, the time required for checking drawings is 10 seconds × 700 = 7000 seconds (about 2 to 3 hours). In addition, manufacturing equipment includes an average of 10 units. In addition, if the manufacturing equipment is large, the manufacturing equipment may be configured from 60 units. Therefore, the number of locations to be checked on the drawings is 700x10 = 7000, and the time for checking drawings is 20 to 30 hours. Also, for a large manufacturing equipment, the time for checking drawings is 100 to 180 hours. Therefore, a method for reducing the time for checking drawings as much as possible is required.

The following is a description of the second embodiment.

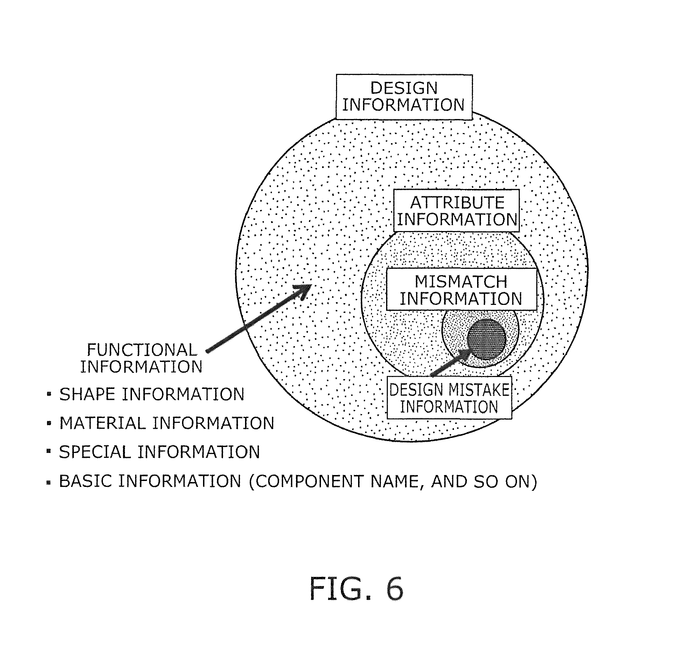

FIG. 6 illustrates the concept of design information.

Design information is broadly divided into functional information and attribute information. Functional information includes shape information, material information, special information, mechanical strength, operational time, and so on, in addition to basic information such as information regarding whether the unit operates properly or not, components names, and so on. Attribute information includes surface roughness, dimensional tolerances, and geometrical tolerance information far component processing and component assembly, that do not appear on the shape. Design information is a higher-level concept than attribute information. In addition, attribute information includes mismatch information regarding mismatches between attribute information. Design error information is included within mismatch information, but this is difficult to confirm visually, and the degree of difficulty is further increased when checking in three-dimensional space which includes depth.

Functional information is related to the designer's intention, development technology, information on the product under consideration, production capability, and so on. Therefore checking requires careful consideration. On the other hand, apart from special cases, checking of attribute information is a simple operation in terms of fixed design rules.

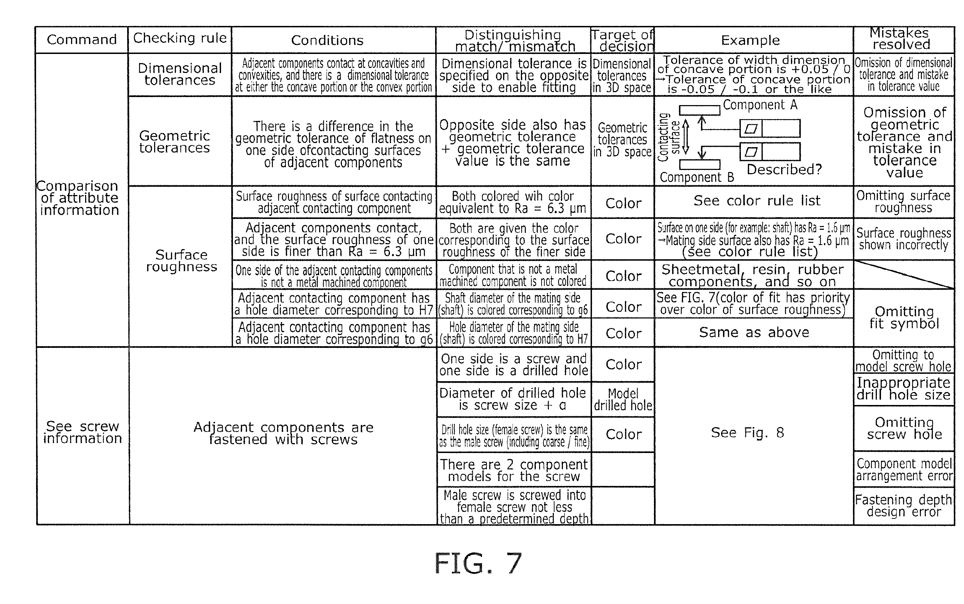

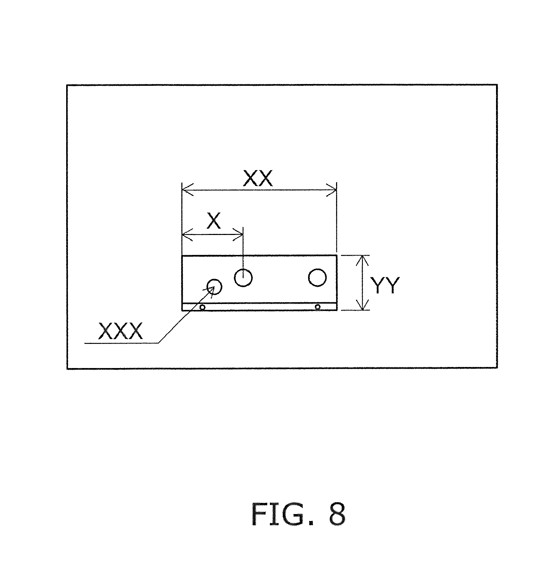

FIG. 7 illustrates an example of checking of attribute information in three-dimensional drawings and checking of screw information. FIG. 8 illustrates an example of a three-dimensional drawing converted to a two-dimensional drawing.

For example, in the checking of attribute information in FIG. 7, checking of dimensional tolerances is carried out under the condition "adjacent components contact at concavities and convexities, and there is a dimensional tolerance at either the concave portion or the convex portion" as the precondition. Next, it is determined whether "a dimensional tolerance is specified on the opposite side to enable fitting" as a match / mismatch. Then, it is checked whether the "tolerance on the concave portion width dimension is +0.05/0, and the tolerance on the convex portion is -0.05/-0.1". In this way omission of tolerances and errors in the tolerance values are eliminated. In addition, FIG. 7 illustrates examples of checking other than dimensional tolerances. In other words, checking attribute information is simple work carried out in accordance with fixed design rules. In Reference Example 2, checking was carried out with reference to the two-dimensional drawing illustrated on FIG. 8. What is required for equipment design using three-dimensional CAD is to directly check drawings from three-dimensional drawings, not checking drawings using two-dimensional drawings as illustrated in FIG. 8.

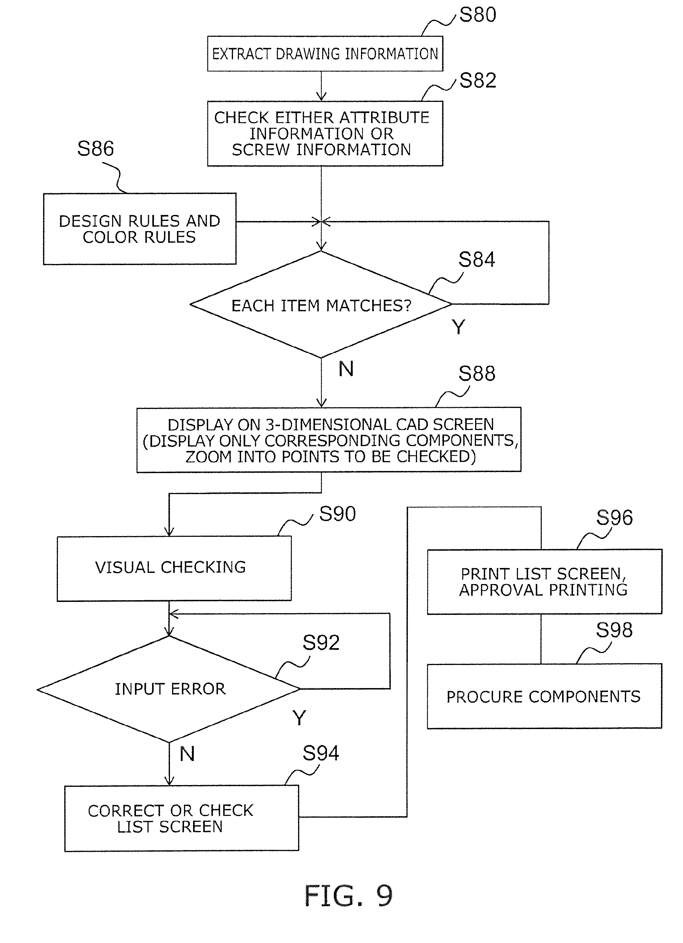

FIG. 9 illustrates the flow of the method of checking drawings according to the second embodiment.

First, the person checking the drawings extracts all the drawing information for the components that constitute the manufacturing equipment (step S80). At this stage, component numbers are applied to the constituent components so it is possible to obtain the drawing information of the constituent components. The constituent components include general-purpose components (purchased components) and non-general-purpose components (process components) as described above.

Next, the person checking the drawings checks the attribute information or the screw information (step S82).

Next, match/mismatch of the attribute information or the screw information is automatically determined for adjacent contacting constituent components (step S84). This determination is carried out in accordance with design rules and color rules (step S86).

For example, when assembled, when a portion A of a general-purpose component from among the plurality of general-purpose components contacts a portion B of another general-purpose component from among the plurality of general-purpose components, it is determined whether or not the attribute information of the portion A and the attribute information of the portion B match.

Also, when assembled, when a portion A of a general-purpose component from among the plurality of general-purpose components contacts a portion B of another general-purpose component from among the plurality of general-purpose components, it is determined whether or not the screw information of the portion A and the screw information of the portion B match.

Specifically, dimensional tolerances, geometric tolerances, surface roughness, fits, and so on, are automatically checked with the surfaces of the constituent components as base points. Automatic checking may be carried out by checking in accordance with design rules defined in JIS standards, or it may be carried out in accordance with rules defined by the designer.

The following is a description of an example of checking for dimensional tolerances.

For example, when it is envisaged that there are constituent components having surfaces with concavities and convexities, as a general rule pairs of constituent components are associated in the design rules. In these cases checking is carried out for matches. Also, in the second embodiment, checking may be carried out for mismatches such as the width dimensions of concave portions have predetermined tolerances, but convex portions do not have predetermined tolerances, or the like.

The following is a description of an example of checking for geometric tolerances.

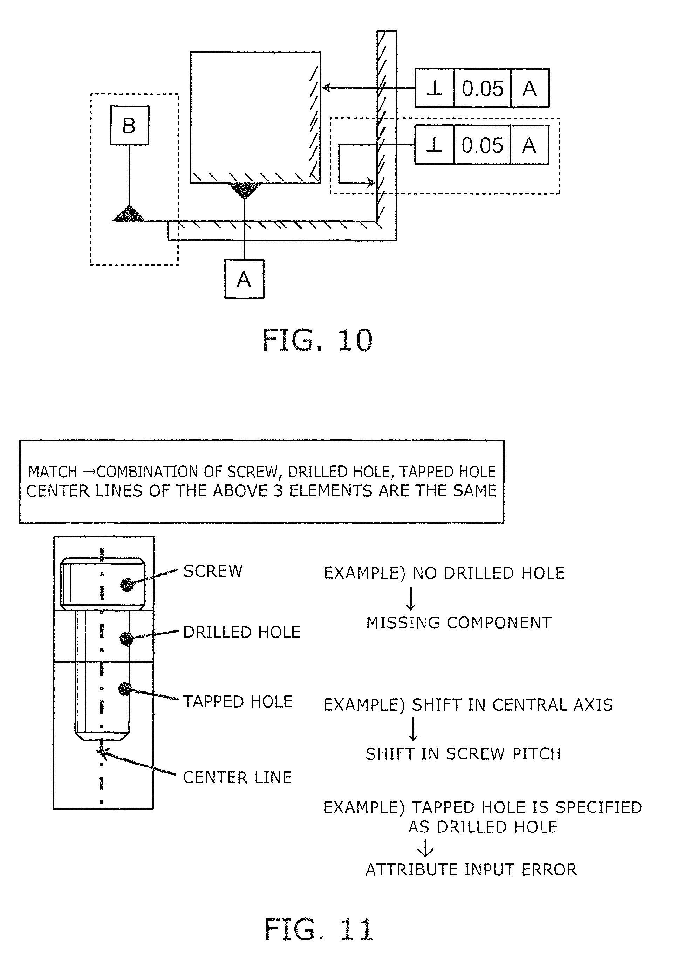

For example, if a right angled component 30 and a square component 31 is envisaged, in the design rule it is necessary to input the same value of right angle for both. For example, in FIG. 10 an example of checking for geometric tolerance is illustrated. In this case it is judged that there is a match. Also, in the second embodiment, in a case where on one side 0.05 mm is input, and on the mating side 0.1 mm is input, it may be judged that there is a mismatch.

The following is a description of an example of checking for surface roughness.

For example, in the case of a contacting surface of two cuboidal constituent components, in a design rule it is necessary to input that when the two constituent components do not move a surface roughness of Ra = 6.3 µm is input, and if the two constituent components do move, a surface roughness of Ra = 1.6 µm or less is input, and, it is necessary that the same value of surface roughness be input for both surfaces. In this case there is a match. Also, in the second embodiment, in a case where the two have different values there may be a mismatch. In the case of surface roughness the judgment may be carried out using a color rule.

The following is a description of an example of checking for fit.

In accordance with drafting standards, the fit between shafts and holes is designated b through × and B through X respectively, and there are many grades of fit. In equipment design, when a hole is H7 normally the shaft is g6. In this case, their symbols are input, and it is necessary that the combination of the two surfaces is H7-g6. In this case there is a match. Also, in the second embodiment, in a case where the two have different values there may be a mismatch. In the case of fit, the judgment may be carried out using a color rule.

For screw size and missing components, checking is carried out with the screw as base point. For example, in the case of manufacturing equipment, all screw information is obtained, and (A) screw sizes, (B) component drilled hole, (C) component tapped hole, (D) screw fastening depth, and (E) whether there are objects to be fastened (normally two) is checked.

FIG. 11 illustrates checking of a screw, a drilled hole, and a tapped hole.

In drafting standards, when a screw size is a metric screw M6 (coarse thread), it is necessary that the drilled hole be 6.6 mm diameter (or a large 7 mm drilled hole). In the second embodiment, if a drilled hole is modeled as an excessive 8 mm it will be a mismatch. In addition, in drafting standards, as a general rule a tapped hole of a constituent component is the same size as on the female screw side. In the second embodiment, in the case of an M8 size and M6 fine thread, there may be a mismatch. Course threads and fine threads are determined by color rule. Also, if there is no drilled hole or tapped hole, it is judged that a component is missing. In addition, if the central axes are shifted, it is judged that there is a shift in screw pitch.

In addition, the depth of fastening of a screw is normally 1.0 to 1.5 times the screw size. In the second embodiment, if the depth is insufficient, or if there is no object to fasten to, there may be a mismatch.

Again, returning to FIG. 9, the method of checking drawings according to the second embodiment is described.

After the judgments regarding matching described above have been carried out, information for checking whether or not there is a match is displayed on the three-dimensional CAD screen. For example, the components under consideration (mainly 2-3 components) only are displayed, and the display zooms into the points to be checked (step S88). Color information that can be visually checked by the person checking the drawings can be included in the information to be checked.

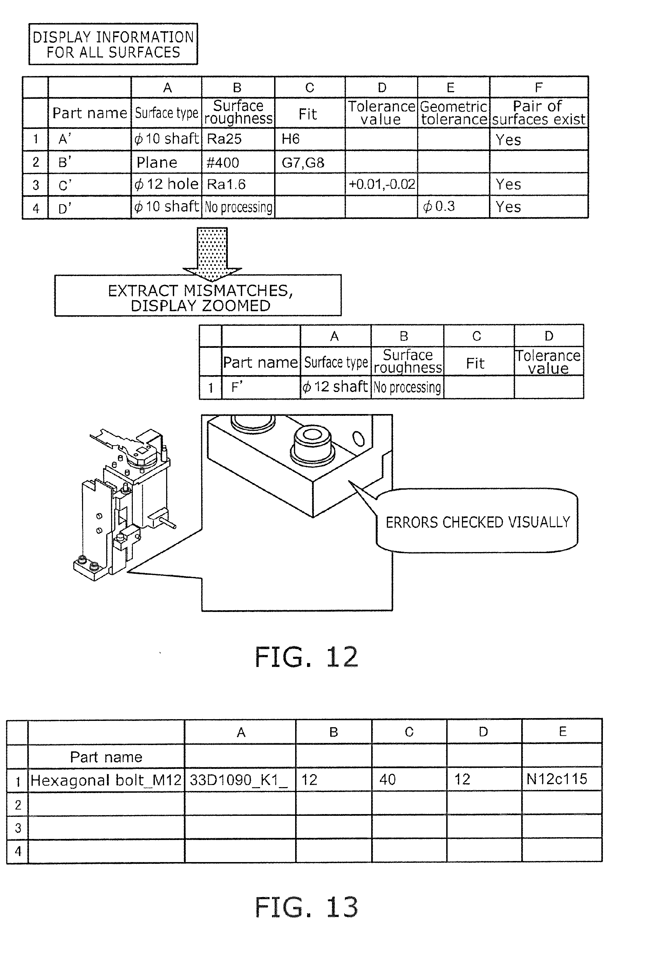

FIG. 12 illustrates an example of checking display displayed on the three-dimensional CAD screen.

Information for checking is displayed on the three-dimensional CAD screen in the form of a separate window. By placing the cursor over each item displayed, the two models under consideration are displayed on the three-dimensional CAD screen. In addition, it is possible to zoom in to the two models under consideration.

After the information to be checked is displayed on the three-dimensional screen, their condition is visually checked by the person checking the drawings (step S90).

Next, the person checking the drawings determines whether or not there was an input mistake in the items visually checked (step S92).

FIG. 13 illustrates a check column displayed in a separate window.

There is a clear input mistake among the items visually checked, so if the person checking the drawings is the designer, the person checking the drawings will edit and correct it on the spot. If the person checking the drawings is a checker, the checker will insert a check (or a symbol) in the row of a separate window that specifies the mistake (step S94).

In addition, in the design device, checks are carried out for (1) omission of arrangement of a component model, and (2) omission of additional information (dimensional tolerance, geometric tolerance, surface roughness, fit, screw size, and so on) on a component.

Also, regarding fit, when mismatches have been intentionally produced, such as (1) when "H7-h6" has been specified, (2) when a screw fastens together three of more components, or (3) when a drilled hole is elongated, and so on, the person checking the drawings accepts them by not entering a check in the check column. This is because this is intentional mismatch information by the designer, and not a design mistake.

After all the checks in the drawing checking operation as described above have been completed, the drawings and check columns are printed out, and the work transitions to the stage of obtaining the approval of the person responsible (step S94). In this way the drawings can be issued. Thereafter the components are procured (step S96).

Also, for missing component mistakes, the check for objects fastened as described above can be confirmed. The rules necessary for checking can be changed in the initial file setting, and the check items can be changed to suit the user's rules. Also, for checking surface roughness, fit, and screw size, color rules can be specified rather than the dimensional annotation of drafting standards.

Regarding interference checking tools, which are one method of checking three-dimensional model drawings, in conventional interference checking tools, interference can be detected between models. For example, it is not possible to detect information that does not appear in the shape, such as shape mismatches such as a shaft is too small for a hole or the like, or a missing component that should contact a certain constituent component, and so on. In contrast, in the second embodiment, it is possible to check drawings for items not covered by conventional interference checks (shape mismatches, missing components).

In this way, according to the second embodiment, by checking the drawing information it is possible to reduce the time and effort required for checking drawings manually. According to the second embodiment, the items that have to be checked manually by the person checking the drawings are mismatches only (see the description for step S94). If the design mistake (error) rate in equipment design is about 10%, the number of items checked in the second embodiment is 1/10 the number of items checked in Reference Example 2. In this way the time for checking drawings per unit is about 700 seconds (about 10 to 15 minutes). As a result the operation of checking drawings is further reduced.

### Third Embodiment

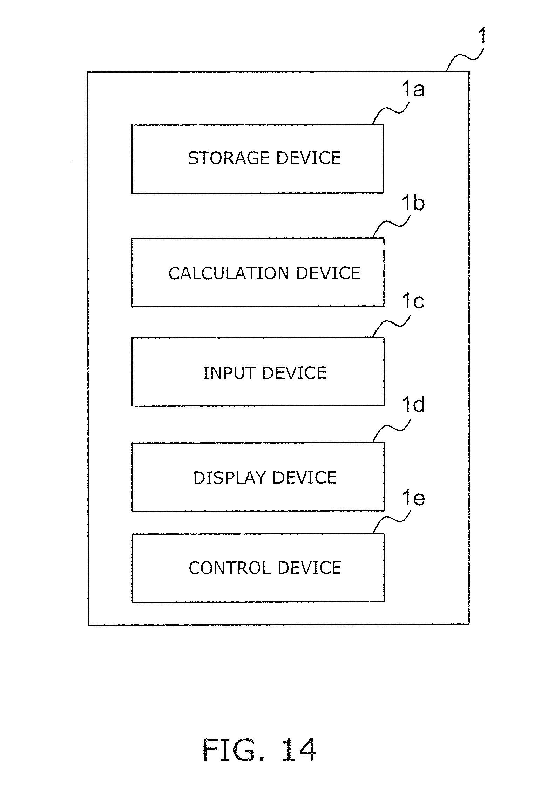

FIG. 14 illustrates a block diagram for a design device according to a third embodiment.

A design device 1 according to the third embodiment is a three-dimensional CAD device. The design device 1 is a device that implements the first embodiment and the second embodiment. If the design device 1 is used, it is possible to design products that include a plurality of general-purpose components and a plurality of non-general-purpose components. Also, if the design device 1 is used, it is possible to inherit color information according to the first embodiment and to automatically check drawings according to the second embodiment.

For example the design device 1 includes a storage device 1a that is capable of storing information, a calculation device 1b that is capable of calculating and determining data, an input device 1c that can input information, a display device 1d that can display information, and a control device 1e that controls the storage device 1a, the calculation device 1b, the input device 1c, and the display device 1d.

The designer can obtain from the storage device 1a, such as memory or the like, a plurality of general-purpose components in which the plurality of attribute information of each of the plurality of general-purpose components has been substituted with color information, via the input device 1c, such as a keyboard or the like. The designer can arrange the plurality of general-purpose components and the plurality of non-general-purpose components on the display device 1d (three-dimensional CAD screen).

The designer can assemble each of the plurality of general-purpose components and each of the plurality of non-general-purpose components into the product on the display device 1d. In addition the calculation device 16 can substitute each of the plurality of attribute information of each of the plurality of non-general-purpose components with color information.

When assembling, when a portion of any of the plurality of non-general-purpose components contacts a portion of any of the plurality of general-purpose components, the control device 1e automatically inherits the color information of the portion of the general-purpose component from among the plurality of general-purpose components to the portion of the non-general-purpose component from among the plurality of general-purpose components.

When any of the plurality of general-purpose components displayed on the display device 1d is displayed as a two-dimensional drawing, the control device 1e can revert color information of the general-purpose component from among the plurality of general-purpose components to the attribute information from among the plurality of attribute information, and add the attribute information from among the plurality of attribute information onto the two-dimensional drawing.

When any of the plurality of non-general-purpose components displayed on the display device 1d is displayed as a two-dimensional drawing, the control device 1e can revert color information of the non-general-purpose component from among the plurality of non-general-purpose components to the attribute information from among the plurality of attribute information, and add the attribute information from among the plurality of attribute information onto the two-dimensional drawing.

When, as a result of the designer assembling the components, a portion A of a general-purpose component from among the plurality of general-purpose components contacts a portion B of another general-purpose component from among the plurality of general-purpose components, the calculation device 1b can determine whether or not the attribute information of the portion A and the attribute information of the portion B match.

When, as a result of assembling the components, a portion A of a general-purpose component from among the plurality of general-purpose components contacts a portion B of another general-purpose component from among the plurality of general-purpose components, the calculation device 1b can determine whether or not the screw information of the portion A and the screw information of the portion B match.

The display device 1d can display the information required to check whether or not the above match. This information required for checking includes color information.

### Fourth Embodiment

In the first through third embodiments as described above, the operations other than those carried out by the designer, the draftsperson, the person checking the drawings, and so on can be automated, and executed automatically on a computer using a computer program.

For example, a program is provided that can be used in the design method of designing products that include a plurality of general-purpose components and a plurality of non-general-purpose components. The program is used after a plurality of general-purpose components in which the plurality of first attribute information of each of the plurality of general-purpose components for which color information is substituted is obtained from the storage device, the plurality of general-purpose components is arranged on the three-dimensional CAD screen, the plurality of non-general-purpose components is arranged on the three-dimensional CAD screen, and each of the arranged plurality of general-purpose components and each of the arranged plurality of non-general-purpose components has been assembled into the component on the three-dimensional CAD screen. The program executes the substitution of each of the plurality of second attribute information included in each of the plurality of non-general-purpose components into color information on the computer.

Specifically, when assembled, when a first portion of any of the plurality of non-general-purpose components contacts a second portion of any of the plurality of general-purpose components, the program causes the computer to cause the color information of the second portion of the general-purpose component to be inherited by the first portion of the on-general-purpose component.

Also, when any of the plurality of general-purpose components displayed on the three-dimensional CAD device is displayed as a two-dimensional drawing, the program causes the computer to revert the color information of the general-purpose component from among the plurality of general-purpose components to the first attribute information from among the plurality of first attribute information, and add the first attribute information from among the plurality of attribute information onto the two-dimensional drawing.

Also, when any of the plurality of non-general-purpose components displayed on the three-dimensional CAD device is displayed as a two-dimensional drawing, the program causes the computer to revert the color information of the non-general-purpose component from among the plurality of non-general-purpose components to the second attribute information from among the plurality of second attribute information, and add the second attribute information from among the plurality of second attribute information onto the two-dimensional drawing.

Also, when a third portion of a first general-purpose component from among the plurality of general-purpose components contacts a fourth portion of a second general-purpose component from among the plurality of general-purpose components, the program causes the computer to determine whether or not the first attribute information of the third portion matches the first attribute information of the fourth portion.

Also, when the third portion of the first general-purpose component from among the plurality of general-purpose components contacts the fourth portion of the second general-purpose component from among the plurality of general-purpose components, the program causes the computer to determine whether or not the screw information of the third portion matches the screw information of the fourth portion.

Also, the program causes the computer to display on the three-dimensional CAD screen the information required for checking whether or not the above match.

Methods and step flows apart from this and the methods and step flows included in the first through third embodiments as described above can be automatically executed by the computer program. Also, the program that includes this programming can be used in the CAD device as a tool incorporated within the CAD device.

The embodiments have been described above with reference to examples. However, the embodiments are not limited to these examples. More specifically, these examples can be appropriately modified in design by those skilled in the art. Such modifications are also encompassed within the scope of the embodiments as long as they include the features of the embodiments. The components included in the above examples and the layout, material, condition, shape, size and the like thereof are not limited to those illustrated, but can be appropriately modified.

Furthermore, the components included in the above embodiments can be combined as long as technically feasible. Such combinations are also encompassed within the scope of the embodiments as long as they include the features of the embodiments. In addition, those skilled in the art could conceive various modifications and variations within the spirit of the embodiments. It is understood that such modifications and variations are also encompassed within the scope of the embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A design method for designing a product including a plurality of general-purpose components and a plurality of non-general-purpose components, the design method comprising the steps of:
(a) obtaining from a storage device (1a) the plurality of general-purpose components having color information substituted for a plurality of first attribute information of each of the plurality of general-purpose components;
(b) arranging the plurality of general-purpose components on a three-dimensional CAD screen (1d), and arranging the plurality of non-general-purpose components on the three-dimensional CAD screen (1d); and
(c) assembling each of the arranged plurality of general-purpose components and each of the plurality of the non-general-purpose components into the product on the three-dimensional CAD screen (1d), and substituting the color information for each of a plurality of second attribute information contained in any of the plurality of the non-general-purpose components.

2. The design method according to claim 1, wherein each of the plurality of first attribute information or each of the plurality of second attribute information includes any of the surface roughness information, tolerance information, fit information, and material information of any of the plurality of general-purpose components.

3. The design method according to any of claims 1 and 2, wherein in the assembling in the step (c),
when a first portion of any of the plurality of non-general-purpose components and a second portion of any of the plurality of general-purpose components are in contact with each other, the color information of the second portion of any of the plurality of general-purpose components is inherited by the first portion of any of the plurality of non-general-purpose components.

4. The design method according to claim 3, wherein after the step (c), when showing any of the plurality of general-purpose components displayed on the three-dimensional CAD screen (1d) as a two-dimensional drawing, the color information included in any of the plurality of general-purpose components is reverted to any of the plurality of first attribute information, and the plurality of first attribute information is added to the two-dimensional drawing.

5. The design method according to claim 3, wherein after the step (c), when showing any of the plurality of non-general-purpose components displayed on the three-dimensional CAD screen (1d) as a two-dimensional drawing, the color information included in any of the plurality of non-general-purpose components is reverted to the plurality of second attribute information, and the plurality of second attribute information is added to the two-dimensional drawing.

6. The design method according to any of claims 1-5, wherein the assembling in the step (c) includes,
when bringing a third portion of a first general-purpose component of the plurality of general-purpose components and a fourth portion of a second general-purpose component from among the plurality of general-purpose components into contact with each other, consistency or inconsistency between the first attribute information of the third portion and the first attribute information of the fourth portion.

7. The design method according to any of claims 1-6, wherein the plurality of general-purpose components further includes a plurality of screw information, the color information is substituted for the plurality of screw information, and
in the assembling in step (c),
when bringing a third portion of a first general-purpose component of the plurality of general-purpose components and a fourth portion of a second general-purpose component of the plurality of general-purpose components into contact with each other, consistency or inconsistency between screw information of the third portion and screw information of the fourth portion is determined.

8. A design device for designing a product including a plurality of general-purpose components and a plurality of non-general-purpose components, the design device being capable of
obtaining, from a storage device (1a), the plurality of general-purpose components having color information substituted for a plurality of first attribute information of each of the plurality of general-purpose components;
arranging the plurality of general-purpose components on a three-dimensional CAD screen (1d), and arranging the plurality of non-general-purpose components on the three-dimensional CAD screen (1d); and
assembling each of the arranged plurality of general-purpose components and each of the arranged plurality of the non-general-purpose components into the product on the three-dimensional CAD screen (1d), and substituting the color information for each of a plurality of second attribute information included in the plurality of the non-general-purpose components.

9. The design device according to claim 8, wherein each of the plurality of first attribute information or each of the plurality of second attribute information includes any of surface roughness information, tolerance information, fitting information, and material information of each of the plurality of general-purpose components.

10. The design device according to any of claims 8 and 9, wherein in the assembling, when a first portion of any of the plurality of non-general-purpose components and a second portion of any of the plurality of general-purpose components are in contact with each other, the color information of the second portion of the general-purpose component can be inherited by the first portion of the non-general-purpose component.

11. The design device according to claim 10, wherein after substituting the color information, when showing any of the plurality of general-purpose components displayed on the three-dimensional CAD screen (1d) as a two-dimensional drawing, the color information contained in any of the plurality of general-purpose components can be reverted to any of the plurality of first attribute information, and any of the plurality of first attribute information can be added to the two-dimensional drawing.

12. The design device according to claim 10, wherein after substituting the color information, when showing any of the plurality of non-general-purpose components displayed on the three-dimensional CAD screen (1d) as a two-dimensional drawing, the color information contained in any of the plurality of non-general-purpose components can be reverted to any of the plurality of second attribute information, and any of the plurality of second attribute information can be added to the two-dimensional drawing.

13. The design device according to any of claims 8-12, wherein in the assembling, when bringing a third portion of a first general-purpose component of the plurality of general-purpose components and a fourth portion of a second general-purpose component of the plurality of general-purpose components into contact with each other, consistency or inconsistency between a first attribute information of the third portion and a first attribute information of the fourth portion can be determined.

14. The design device according to any of claims 8-13, wherein each of the plurality of general-purpose components further includes a plurality of screw information, the color information is substituted for the plurality of screw information, and
in the assembling, when bringing a third portion of a first general-purpose component of the plurality of general-purpose components and a fourth portion of a second general-purpose component of the plurality of general-purpose components into contact with each other, consistency or inconsistency between screw information of the third portion and screw information of the fourth portion can be determined.

15. A design program used in a design method for designing a product including a plurality of general-purpose components and a plurality of non-general-purpose components, the design program comprising the steps of: obtaining, from a storage device (1a), the plurality of general-purpose components for which color information is substituted for a plurality of first attribute information of the plurality of general-purpose components; arranging the plurality of general-purpose components on a three-dimensional CAD screen (1d), and arranging the plurality of non-general-purpose components on the three-dimensional CAD screen (1d); assembling each of the arranged plurality of general-purpose components and each of the arranged plurality of non-general-purpose components into the product on the three-dimensional CAD screen (1d); and thereafter causing a computer to substitute the color information for each of a plurality of second attribute information contained in any of the non-general-purpose components.

16. The design program according to claim 15, wherein each of the plurality of first attribute information or each of the plurality of second attribute information includes any of surface roughness information, tolerance information, fitting information, and material information of each of the plurality of general-purpose components.

17. The design program according to any of claims 15 and 16, wherein in the assembling, when a first portion of any of the plurality of non-general-purpose components and a second portion of any of the plurality of general-purpose components are in contact with each other, the color information of the second portion of any of the plurality of general-purpose components is inherited by the first portion of any of the plurality of non-general-purpose components.

18. The design program according to claim 17, wherein after the color information is inherited, when showing any of the plurality of general-purpose components displayed on the three-dimensional CAD screen (1d) as a two-dimensional drawing, the color information contained in any of plurality of general-purpose components is reverted to any of the plurality of first attribute information, and any of the plurality of first attribute information is added to the two-dimensional drawing.

19. The design program according to claim 17, wherein after the color information is inherited, when showing any of the plurality of non-general-purpose components displayed on the three-dimensional CAD screen (1d) as a two-dimensional drawing, the color information contained in any of plurality of non-general-purpose components is reverted to any of the plurality of second attribute information, and any of the plurality of second attribute information is added to the two-dimensional drawing.

20. The design program according to any of claims 15-19, wherein in the assembling, when bringing a third portion of a first general-purpose component of the plurality of general-purpose components and a fourth portion of a second general-purpose component of the plurality of general-purpose parts into contact with each other, consistency or inconsistency between a first attribute information of the third portion and a first attribute information of the fourth portion is determined.
